# EUROPEAN PATENT APPLICATION

(11) **EP 1 270 226 A2**
(43) Date of publication of application: **02.01.2003**
(21) Application number: 02010403.0
(22) Date of filing: 08.05.2002
(51) Int. Cl.: B41J 2/05, B41J 2/175

(54) **Ink consumption amount-calculating method and device, ink jet printer incorporating the device, printing cost-calculating system, and coloring material supply management system**

(30) Priority: 14.06.2001 JP 2001180521; 14.06.2001 JP 2001180522; 14.06.2001 JP 2001180523
(71) Applicant: SEIKO EPSON CORPORATION, Shinjuku-ku, Tokyo 163-0811 (JP)
(72) Inventor: Minowa, Yoshiki, Suwa-shi, Nagano-ken 392-8502 (JP); Akaiwa, Masao, Suwa-shi, Nagano-ken 392-8502 (JP)
(74) Representative: Hoffmann, Eckart, Dipl.-Ing.

(57) **Abstract**

There are provided an ink consumption amount-calculating method and device which are capable of calculating the amount of ink consumed accurately, an ink jet printer incorporating the device, a printing cost-calculating system capable of calculating a printing cost efficiently and promptly, and a coloring material supply management system capable of supplying at least one coloring material efficiently. On the part of a printing company, the number of times of ink ejection from an ink jet head of the ink jet printer is counted, and an amount of ink consumed is calculated based on the counted number of times of ink ejection. A management company receives information of the calculated amount of ink consumed via a network. The management company calculates a printing cost and issues an instruction for ink supply, based on the received information.

## Description

### BACKGROUND OF THE INVENTION

### Field of the Invention

This invention relates to an ink consumption amount-calculating method and device for calculating the amount of ink consumed by an ink jet printer, and an ink jet printer incorporating the same, a printing cost-calculating system for calculating a printing cost required for preparing printed matter by a printing apparatus using at least one coloring material, and a coloring material supply management system for supplying at least one coloring material for use in the printing apparatus.

### Prior Art

Conventionally, a printing company having received a request for preparing printed matter calculates a printing cost (initial cost) required for preparing the printed matter, based on an artwork cost and a plate cost. Recently, however, so-called "digital printing", which is performed not by using artwork, but based on "digital image", has been coming into wide use. In the field of this technology, development of "ink jet printers" is particularly remarkable. An ink jet printer ejects ink as ink particles from thin nozzles to thereby record an image on a print medium fed to a position opposed to the nozzles.

Printing by an "ink jet printer" requires no artwork, and hence a cost of the printing is mainly influenced by the amount of consumption of one or more coloring materials. Conventionally, however, there existed no means for accurately calculating (measuring) the amount of a coloring material consumed, even when the "ink jet printer" is used. This inevitably made it necessary to employ the same charging system as employed in printing services using artwork. As a result, a profit rate of a printing company considerably changed depending on an image for printing due to the use of this charging system ignoring the amount of a coloring material actually used for printing.

Further, conventionally, each coloring material, such as ink, for use in a printing company has been supplied in a state contained in a cartridge, and the printing company has paid a price (coloring material price) for the cartridge containing the coloring material. For instance, when a color printing apparatus is used, a plurality of kinds of cartridges for colors, as M (magenta) color, C (cyan) color, Y (yellow) color, and K (black) color, are required to be supplied. Therefore, conventionally, a printing company has had to place an order for a required number of cartridges while managing or checking a stock of cartridges on a color-by-color basis, and then pay for the ordered cartridges.

However, in the system described above, a printing company is always required to manage the stock of cartridges. Especially when a plurality of kinds of printing apparatuses are used, and types of cartridges used in the respective apparatuses are different, stock management is complicated, and time and labor required for an ordering process is increased. For this reason, there is an increasing demand to a system in which a company that supplies coloring materials performs stock management for each printing company and also efficiently carry out accounting processing including payment for coloring materials to the supplier.

### SUMMARY OF THE INVENTION

It is a first object of the invention to provide an ink consumption amount-calculating method and device which are capable of accurately calculating the amount of ink consumed by an ink jet printer based on the number of times of ink ejection from an ink jet head, and an ink jet printer incorporating the device.

It is a second object of the invention to provide a printing cost-calculating system in which one party counts the amount of at least one coloring material consumed by a printing apparatus, and the other party receives information of the amount of the coloring material consumed via a network, for efficient and prompt calculation of a printing cost.

It is a third object of the invention to provide a coloring material supply management system in which one party counts the amount of at least one coloring material consumed by a printing apparatus, and the other party receives information of the amount of the coloring material consumed via a network, for efficient supply of the at least one coloring material.

To attain the above first object, according to a first aspect of the invention, there is provided an ink consumption amount-calculating method for calculating an amount of ink consumed by an ink jet printer,
the ink consumption amount-calculating method comprising the steps of:
counting a number of times of ink ejection from an ink jet head; and
calculating the amount of ink consumed based on the number of times of ink ejection counted in the step of counting the number of times of ink ejection.

To attain the above first object, according to a second aspect of the invention, there is provided an ink consumption amount-calculating device for calculating an amount of ink consumed by an ink jet printer,
the ink consumption amount-calculating device comprising:
counting means for counting a number of times of ink ejection from an ink jet head; and
calculating means for calculating the amount of ink consumed based on the number of times of ink ejection counted by the counting means.

According to the ink consumption amount-calculating method and device, the number of times of ink ejection from the ink jet head of the ink jet printer is counted, and then the amount of ink consumed is calculated based on the counted number of times of ink ejection, so that it is possible to accurately calculate the amount of ink consumed.

Preferably, the ink jet head is capable of ejecting the ink in a plurality of unit ejection amounts, and the step of counting the number of times of ink ejection includes counting numbers of times of ink ejection on a unit ejection amount-by-unit ejection amount basis, the step of calculating the amount of ink consumed including calculating the amount of ink consumed based on the numbers of times of ink ejection counted on a unit ejection amount-by-unit ejection amount basis.

Similarly, it is preferable that the ink jet head is capable of ejecting the ink in a plurality of unit ejection amounts, and the counting means includes means for counting numbers of times of ink ejection on a unit ejection amount-by-unit ejection amount basis, the calculating means including means for calculating the amount of ink consumed based on the numbers of times of ink ejection counted on a unit ejection amount-by-unit ejection amount basis.

According to these preferred embodiments, since the numbers of times of ink ejection are calculated on a unit ejection amount-by-unit ejection amount basis, even when the amount of ink ejected from the ink jet head for each ejecting operation is not fixed or uniform, the amount of ink consumed can be calculated with accuracy.

Preferably, the step of calculating the amount of ink consumed includes calculating the amount of ink consumed by consulting a unit ejection amount-specific ink consumption table associating respective numbers of times of ink ejection of different unit ejection amounts with respective amounts of ink consumed.

According to this preferred embodiment, it is possible to calculate the amount of ink consumed by consulting the unit ejection amount-specific ink consumption table. In other words, no complicated calculation program is required for calculation of the amount of ink consumed.

Preferably, the ink jet printer is capable of carrying out color printing, and the step of counting the number of times of ink ejection includes counting numbers of times of ink ejection on a color-by-color basis, the step of calculating the amount of ink consumed including calculating the amount of ink consumed based on the numbers of times of ink ejection counted on a color-by-color basis.

Similarly, it is preferable that the ink jet printer is capable of carrying out color printing, and the counting means includes means for counting numbers of times of ink ejection on a color-by-color basis, the calculating means including means for calculating the amount of ink consumed based on the numbers of times of ink ejection counted on a color-by-color basis.

According to these preferred embodiments, since the numbers of times of ink ejection are counted on a color-by-color basis, even when the ink jet printer is a color printing apparatus using a plurality of color inks, it is possible to calculate the amounts of consumption of the respective color inks accurately.

Preferably, the step of calculating the amount of ink consumed includes calculating the amount of ink consumed by consulting a color-specific ink consumption table associating respective numbers of times of ink ejection for different colors with respective amounts of ink consumed.

According to this preferred embodiment, it is possible to calculate the amount of ink consumed by consulting the color-specific ink consumption table. In other words, no complicated calculation program is required for calculation of the amount of ink consumed.

Preferably, the step of calculating the amount of ink consumed includes calculating the amount of ink consumed, excluding an amount of ink consumed for maintenance operation of the ink jet printer.

According to this preferred embodiment, the amount of ink consumed e.g. for test printing in the maintenance operation of the ink jet printer can be excluded from the object for calculation of the amount of ink consumed.

Preferably, the ink jet head has nozzles for ejecting the ink therefrom, and the step of calculating the amount of ink consumed includes calculating the amount of ink consumed, excluding an amount of ink consumed for automatic cleaning executed by sucking the ink from the nozzles of the ink jet head.

According to this preferred embodiment, the amount of ink consumed for the automatic cleaning executed so as to maintain excellent ejection of ink from the ink jet head (i.e. for prevention of nozzle clogging by ink) can be excluded from the object for calculation of the amount of ink consumed.

Preferably, the step of calculating the amount of ink consumed includes calculating the amount of ink consumed, excluding an amount of ink consumed for periodical flushing executed by ejecting ink periodically from the ink jet head.

According to this preferred embodiment, the amount of ink consumed for the periodical flushing executed by ejecting ink periodically from the ink jet head so as to prevent ink from being dried can be excluded from the object for calculation of the amount of ink consumed.

To attain the above first object, according to a third aspect of the invention, there is provided an ink jet printer comprising:
an ink consumption amount-calculating device for calculating an amount of ink consumed, including counting means for counting a number of times of ink ejection from an ink jet head, and calculating means for calculating the amount of ink consumed based on the number of times of ink ejection counted by the counting means; and
printing means for carrying out printing by using the ink.

This ink jet printer according to the third aspect makes it possible to accurately calculate the amount of ink consumed.

Preferably, the ink jet head is capable of ejecting the ink in a plurality of unit ejection amounts, and the counting means includes means for counting numbers of times of ink ejection on a unit ejection amount-by-unit ejection amount basis, the calculating means including means for calculating the amount of ink consumed based on the numbers of times of ink ejection counted on a unit ejection amount-by-unit ejection amount basis.

Preferably, the ink jet printer is capable of carrying out color printing, and the counting means includes means for counting numbers of times of ink ejection on a color-by-color basis, the calculating means including means for calculating the amount of ink consumed based on the numbers of times of ink ejection counted on a color-by-color basis.

To attain the above second object, according to a fourth aspect of the invention, there is provided a printing cost-calculating system for calculating a printing cost required for preparing printed matter by a printing apparatus using at least one coloring material,
the printing cost-calculating system comprising:
counting means for counting an amount of the at least one coloring material consumed by the printing apparatus;
receiving means for receiving information of the amount of the at least one coloring material consumed which is counted by the counting means, via a network; and
calculating means for calculating the printing cost based on the information received by the receiving means.

According to this printing cost-calculating system, it is possible to receive the information of the counted amount of the coloring material consumed by the printing apparatus via the network, and then calculate the printing cost based on the counted amount of consumption of the coloring material. The information of the amount of the coloring material consumed is thus received via the network, and hence it is possible to calculate the printing cost efficiently and promptly even at a place located remote from the printing apparatus.

Preferably, the calculating means includes means for calculating the printing cost by consulting a coloring material price table associating amounts of the at least one coloring material to be consumed with prices of the at least one coloring material corresponding to the respective amounts.

According to this preferred embodiment, it is possible to calculate the printing cost by consulting the coloring material price table. In other words, no complicated calculation program is required for calculation of a printing cost.

Preferably, the ink printing apparatus includes a printing apparatus using coloring materials of a plurality of colors, and the counting means includes means for counting amounts of the coloring materials consumed, on a color-by-color basis, the calculating means including means for calculating the printing cost by consulting a color-specific coloring material price table associating the respective amounts of the plurality of colors of the coloring materials to be consumed with respective color-specific prices of the coloring materials corresponding to the amounts.

According to this preferred embodiment, it is possible to calculate the printing cost by counting the amounts of the plurality of colors of the coloring materials consumed on a color-by-color basis and then consulting the color-specific coloring material price table. Therefore, even when the respective colors of the coloring materials are different in price (unit price), no complicated calculation program is required for calculation of a printing cost.

Preferably, the price of each of the at least one coloring material can be changed in a floating manner.

According to this preferred embodiment, even when the kinds of the coloring materials have been changed, or when the prices (unit prices) of the coloring materials are not constant due to various conditions, a printing cost can be calculated in accordance with floating changes in price. In short, more accurate calculation of the printing cost is possible.

Preferably, the receiving means can receive the information at a desired time or at any time.

According to this preferred embodiment, the receiving means can receive the information of the amount of the coloring material consumed according to needs on the side of the receiving means, which enables more efficient calculation of a printing cost.

Preferably, the network is constructed by an internet or a LAN.

According to this preferred embodiment, since an existing network constructed by an internet (such as the Internet) or a LAN can be utilized, it is not required to construct a new network. Further, utilization of a WAN, such as the Internet, makes it possible to easily perform business operation over a further-expanded area.

Preferably, the at least one coloring material includes ink or toner.

According to this preferred embodiment, when ink or toner is used for printing, it is possible to utilize the present system which enables efficient calculation of a printing cost.

Preferably, the printing apparatus includes an ink jet printer or an electrophotographic printer.

According to this preferred embodiment, when an ink jet printer or an electrophotographic printer is used for preparing the printed matter, it is possible to utilize the present system which enables efficient calculation of a printing cost.

Preferably, the counting means includes means for counting the amount of the at least one coloring material consumed, excluding an amount of the at least one coloring material consumed for other purposes than preparation of the printed matter.

According to this preferred embodiment, it is possible to count the amount of the coloring material consumed, excluding the amount consumed for other purposes than preparation of the printed matter. This makes it possible to calculate a printing cost required only for the amount of the coloring material actually consumed for preparation of printed matter. As a result, the party consuming the coloring material is not required to pay for the amount of the coloring material consumed for non-printing purposes, and hence no disadvantage occurs.

Preferably, the amount of the at least one coloring material consumed for other purposes than the preparation of the printed matter includes an amount of the coloring consumed for maintenance operation of the printing apparatus.

According to this preferred embodiment, the amount of the at least one coloring material consumed for the maintenance operation by the printing apparatus is excluded from the amount of the at least one coloring material consumed which is to be counted for calculation of the printing cost. As a result, the party consuming the coloring material is not required to pay for the amount of the coloring material consumed for the maintenance operation.

Preferably, the printing apparatus includes an ink jet printer including an ink jet head having nozzles for ejecting ink therefrom, and the amount of the at least one coloring material consumed for other purposes than the preparation of the printed matter includes an amount of ink consumed for automatic cleaning executed by sucking the ink from the nozzles of the ink jet head.

According to this preferred embodiment, when the printing apparatus is an ink jet printer, the amount of ink consumed for the automatic cleaning is excluded from the amount of the coloring material consumed which is to be counted for calculation of the printing cost. As a result, the party consuming the coloring material is not required to pay for the amount of ink consumed for the automatic cleaning.

Preferably, the printing apparatus is an ink jet printer including an ink jet head having nozzles for ejecting ink therefrom, and the amount of the at least one coloring material consumed for other purposes than the preparation of the printed matter includes an amount of ink consumed for periodical flushing executed by ejecting the ink periodically from the nozzles of the ink jet head.

According to this preferred embodiment, when the printing apparatus is an ink jet printer, the amount of ink consumed for the periodical flushing is excluded from the amount of the at least one coloring material consumed which is to be counted for calculation of the printing cost. As a result, the party consuming the coloring material is not required to pay for the amount of ink consumed for the periodical flushing.

Preferably, the counting means includes means for counting the amount of the at least one coloring material consumed, based on a number of times of ink ejection from the ink jet head.

According to this preferred embodiment, since the amount of the coloring material consumed is calculated based on the number of times of ink ejection from the ink jet head, it is possible to calculate the printing cost accurately.

Preferably, the ink jet head is capable of ejecting ink in a plurality of unit ejection amounts, and the counting means includes means for counting numbers of times of ink ejection on a unit ejection amount-by-unit ejection amount basis.

According to this preferred embodiment, since the numbers of times of ink ejection are counted on a unit ejection amount-by-unit ejection amount basis, even when the amount of ink ejected from the ink jet head for each ejecting operation is not fixed or uniform, the amount of the coloring material consumed can be calculated more accurately. In short, it is possible to calculate the printing cost more accurately.

To attain the above second object, according to a fifth aspect of the invention, there is provided a printing cost-calculating system comprising:
a user terminal capable of transmitting information of an amount of at least one coloring material consumed by a printing apparatus; and
a host terminal capable of receiving the information of the amount of the at least one coloring material consumed, and
wherein the host terminal calculates a printing cost and executes a process for placing an order for coloring material supply to the printing apparatus, based on the information received from the user terminal.

According to this printing cost-calculating system, since the host terminal can receive the information of the amount of the coloring material consumed via the network, it is possible to calculate the printing cost efficiently and promptly even when the host terminal is located remote from the user terminal (i.e. a place where the printing apparatus is installed). Further, since the host terminal executes the process for placing an order for coloring material supply to the printing apparatus, based on the amount of the coloring material consumed, the user terminal is not required to manage consumption of the coloring material. On the other hand, the host terminal can carry out calculation of the printing cost and the process for placing an order for coloring material supply simultaneously, which makes it possible to enhance operational efficiency. It should be noted that the phrase "process for placing an order for coloring material supply" is intended to mean processing for instructing another person (another company) to supply one or more coloring materials and electronic processing (document preparation) for the supply.

Preferably, the printing apparatus includes an ink jet printer, and the amount of the at least one coloring material consumed is calculated based on a number of times of ink ejection from an ink jet head.

According to this preferred embodiment, when the printing apparatus is an ink jet printer, the amount of the coloring material consumed is calculated based on the number of times of ink ejection from the ink jet head, and hence it is possible to calculate the printing cost accurately. In short, the preferred embodiment makes it possible to more accurately execute calculation of a printing cost and a process for placing an order for coloring material supply.

To attain the above third object, according to a sixth aspect of the invention, there is provided a coloring material supply management system for supplying at least one coloring material for use in a printing apparatus,
the coloring material supply management system comprising:
counting means for counting an amount of the at least one coloring material consumed by the printing apparatus;
receiving means for receiving information of the amount of the at least one coloring material consumed which is counted by the counting means, via a network; and
first instruction means for issuing an instruction for supply of the at least one coloring material, based on the information received by the receiving means.

According to this coloring material supply management system, it is possible to receive the information of the counted amount of the coloring material consumed by the printing apparatus via the network, and then calculate the printing cost based on the counted amount of the coloring material consumed. The information of the amount of the coloring material consumed is thus transmitted via the network, and hence it is possible to calculate the printing cost efficiently and promptly even at a place located remote from a place where the printing apparatus is installed.

Preferably, the ink printing apparatus includes a printing apparatus using coloring materials of a plurality of colors, and the counting means includes means for counting amounts of the coloring materials consumed, on a color-by-color basis, the first instruction means including means for issuing instructions for supplying coloring materials on a color-by-color basis.

According to this preferred embodiment, it is possible to count the amounts of the plurality of colors of the coloring materials consumed on a color-by-color basis, and then issue instructions for coloring material supply on a color-by-color basis, based on the amounts of the coloring materials consumed which are counted on a color-by-color basis. Therefore, even when the different colors of coloring materials are used, it is possible to instruct coloring material supply efficiently.

Preferably, the receiving means can receive the information at a desired time or at any time.

According to this preferred embodiment, the information-receiving party can receive the information of the amount of the coloring material consumed according to needs on the side of the information-receiving party, which makes it possible to instruct coloring material supply more efficiently.

Preferably, the coloring material supply management system further comprises second instruction means for issuing an instruction for execution of maintenance services for the printing apparatus when it is detected, based on the information received from the receiving means, that a total amount of the at least one coloring material consumed has reached a predetermined amount.

According to this preferred embodiment, it is possible to issue the instruction for execution of maintenance services for the printing apparatus when it is detected that the total amount of the coloring material consumed has reached the predetermined amount. That is, since the maintenance services are executed according to the amount of the at least one coloring material consumed, it is possible to inspect the printing apparatus in proper timing. Besides, since supply of the at least one coloring material and the maintenance services can be executed simultaneously, it is possible to improve operational efficiency.

Preferably, the network is constructed by an internet or a LAN.

According to this preferred embodiment, since an existing network constructed by an internet or a LAN can be utilized, it is not required to construct a new network. Further, utilization of a WAN, such as the Internet, makes it possible to easily perform business operation over a further-expanded area.

Preferably, the at least one coloring material includes ink or toner.

According to this preferred embodiment, when ink or toner is used for printing, it is possible to utilize the present system which enables efficient instruction for coloring material supply.

Preferably, the coloring material supply management system further comprises maintenance consumption-counting means for counting an amount of the at least one coloring material consumed for a maintenance operation, and the receiving means includes means for receiving information of the amount of the at least one coloring material counted by the maintenance consumption-counting means.

According to this preferred embodiment, it is possible to receive and capture the information of the amount of the coloring material consumed for the maintenance operation.

Preferably, the printing apparatus includes an electrophotographic printer.

According to this preferred embodiment, when an electrophotographic printer is used for preparing the printed matter, it is possible to utilize the present system which enables efficient instruction for coloring material supply.

Alternatively, the printing apparatus includes an ink jet printer including an ink jet head for ejecting ink therefrom.

According to this preferred embodiment, when an ink jet printer is used for preparing the printed matter, it is possible to utilize the present system which enables efficient instruction for coloring material supply.

More preferably, the counting means includes means for counting the amount of the at least one coloring material consumed, based on a number of times of ink ejection from the ink jet head of the ink jet printer.

According to this preferred embodiment, the amount of the at least one coloring material consumed is calculated based on the number of times of ink ejection from the ink jet head, and hence it is possible to calculate the printing cost accurately. In short, the preferred embodiment makes it possible to instruct coloring material supply more accurately.

Preferably, the ink jet head is capable of ejecting the ink in a plurality of unit ejection amounts, and the counting means includes means for counting numbers of times of ink ejection on a unit ejection amount-by-unit ejection amount basis.

According to this preferred embodiment, since the numbers of times of ink ejection are counted on a unit ejection amount-by-unit ejection amount basis, even when the amount of ink ejected from the ink jet head for each ejecting operation is not fixed or uniform, the amount of the coloring material consumed can be calculated accurately. In short, it is possible to instruct coloring material supply more properly and accurately.

Preferably, the coloring material supply management system further comprises cleaning consumption-counting means for counting an amount of the at least one coloring material consumed for automatic cleaning executed by sucking the ink from the ink jet head, and the receiving means includes means for receiving information of the amount of the at least one coloring material counted by the cleaning consumption-counting means.

According to this preferred embodiment, it is possible to receive and capture information of the amount of the coloring material consumed for the automatic cleaning executed so as to maintain excellent ink ejection from the ink jet head of the printer (i.e. for prevention of nozzle clogging by ink).

More preferably, the coloring material supply management system further comprises second instruction means for issuing an instruction for execution of maintenance services for the printing apparatus when it is detected, based on the information received from the receiving means, that a total amount of the at least one coloring material consumed for the automatic cleaning has reached a predetermined amount.

According to this preferred embodiment, since the instruction for execution of the maintenance services for the printing apparatus is issued when it is detected that the total amount of the coloring material consumed for the automatic cleaning has reached the predetermined amount, it is possible to change consumable articles and members consumed by the automatic cleaning, in proper timing.

Preferably, the coloring material supply management system further comprises flushing consumption-counting means for counting an amount of the at least one coloring material consumed for periodical flushing executed by periodically ejecting the ink from the ink jet head, and the receiving means includes means for receiving information of the amount of the at least one coloring material counted by the flushing consumption-counting means.

According to this preferred embodiment, it is possible to receive and capture information of the amount of the coloring material consumed for the periodical flushing executed by periodically ejecting the ink from the ink jet head so as to prevent the ink from being dried.

More preferably, the coloring material supply management system further comprises second instruction means for issuing an instruction for execution of maintenance services for the printing apparatus when it is detected, based on the information received from the receiving means, that a total amount of the at least one coloring material consumed for the periodical flushing has reached a predetermined amount.

According to this preferred embodiment, since the instruction for execution of the maintenance services for the printing apparatus is issued when it is detected that the total amount of the coloring material consumed for the periodical flushing has reached the predetermined amount, it is possible to change consumable articles and members consumed by the periodical flushing, in proper timing.

To attain the above third object, according to a seventh aspect of the invention, there is provided a coloring material supply management system comprising:
a user terminal capable of transmitting information of an amount of at least one coloring material consumed by a printing apparatus; and
a host terminal capable of receiving the information of the amount of the at least one coloring material consumed via a network, and
wherein the host terminal executes a process for placing an order for coloring material supply to the printing apparatus, based on the information received from the user terminal.

According to this coloring material supply management system, since the host terminal can receive the information of the amount of the coloring material consumed via the network, it is possible to carry out the process for placing an order for coloring material supply efficiently even at a place located remote from a place where the printing apparatus is installed.

Preferably, when it is detected, based on the information of the amount of the at least one coloring material consumed, that a total amount of the at least one coloring material consumed has reached a predetermined amount, the host terminal executes a process for placing an order for maintenance services and transmits information of a schedule for execution of the maintenance services to the user terminal.

According to this preferred embodiment, when it is detected that the total amount of the coloring material consumed has reached the predetermined amount, the host terminal executes the process for placing an order for maintenance services, so that it is possible to inspect the printing apparatus in proper timing. Further, since supply of the coloring material and the maintenance services can be executed in a parallel fashion, it is possible to improve operational efficiency. Moreover, since the host terminal transmits the information of the schedule for execution of the maintenance services to the user terminal, it is possible to confirm a date of execution of the maintenance services, and other information on the user terminal.

Preferably, the printing apparatus includes an ink jet printer including an ink jet head for ejecting ink therefrom, and the amount of the at least one coloring material consumed is calculated based on a number of times of ink ejection from the ink jet head.

According to this preferred embodiment, since the amount of the at least one coloring material consumed is calculated based on the number of times of ink ejection from the ink jet head, it is possible to carry out the respective processes for placing orders for coloring material supply and maintenance services more properly and accurately.

To attain the above third object, according to an eighth aspect of the invention, there is provided a coloring material supply management system comprising:
a user terminal capable of transmitting information of an amount of at least one coloring material consumed by a printing apparatus; and
a host terminal capable of receiving the information of the amount of the at least one coloring material consumed, via a network, and
wherein the host terminal transmits information of a schedule for supplying the at least one coloring material to the user terminal, based on the information received from the user terminal,
wherein the user terminal transmits information of a request for supply of the coloring material to the host terminal, based on the information received from the host terminal, and
wherein the host terminal executes a process for placing an order for coloring material supply to the printing apparatus, based on the information of the request for supply of the coloring material, which has been received from the user terminal.

According to this coloring material supply management system, the host terminal transmits the information of the schedule for coloring material supply, based on the information of the amount of the coloring material consumed, which has been received from the user terminal. In response to the information from the host terminal, the user terminal transmits the information of the request for coloring material supply to the host terminal. Then, the host terminal executes the process for placing an order for coloring material supply to the printing apparatus, based on the information of the request for coloring material supply, which has been received from the user terminal. In short, in the present system, the placing of an order for the coloring material, or supply of the coloring material, is executed after exchange of the information of the supply schedule and the supply request between the host terminal and the user terminal. Therefore, it is possible to prevent occurrence of troubles, such as erroneous supply of a coloring material. It should be noted that information of a request for coloring material supply preferably includes either information that "supply is desired" or information that "supply is not desired". In this case, when the host terminal receives the information that "supply is desired", the process for placing an order for coloring material supply is executed.

Preferably, when it is detected, based on the information of the amount of the at least one coloring material consumed, that a total amount of the coloring material consumed has reached a predetermined amount, the host terminal executes a process for placing an order for maintenance services to be executed for the printing apparatus and transmits information of a schedule for execution of the maintenance services to the user terminal.

Preferably, the printing apparatus is an ink jet printer including an ink jet head for ejecting ink therefrom, and the amount of the at least one coloring material consumed is calculated based on a number of times of ink ejection from the ink jet head.

According to these preferred embodiments, it is possible to provide the same effects as obtained from the seventh aspect of the invention.

The above and other objects, features, and advantages of the invention will become more apparent from the following detailed description taken in conjunction with the accompanying drawings.

### BRIEF DESCRIPTION OF THE DRAWINGS

FIG. 1 is a diagram showing a system configuration of a printed matter-issuing system according to an embodiment of the invention;
FIGS. 2A to 2C show an example of a set of "ink consumption lists <current results>" which can be displayed for confirmation of ink consumption by both a printing company and a management company;
FIG. 3 shows an example of an "ink consumption list <monthly total>" which can be displayed for confirmation of ink consumption by both the printing company and the management company;
FIG. 4 shows an example of an "ink consumption list <annual total>" which can be displayed for confirmation of ink consumption by both the printing company and the management company;
FIG. 5 shows an example of a "stock management list" which can be displayed for confirmation of ink stock by the printing company;
FIG. 6 shows an example of an "ink delivery management list" which can be displayed for confirmation of ink delivery by the management company;
FIG. 7 shows an example of a "maintenance management list" which can be displayed for confirmation of maintenance services by the management company;
FIG. 8A shows an example of a "dot size-specific ink consumption table"; and
FIG. 8B shows an example of a "color-specific ink unit price table"

### DETAILED DESCRIPTION OF THE PREFERRED EMBODIMENT

The invention will now be described in detail with reference to drawings showing an embodiment thereof. In the present embodiment, an ink consumption amount-calculating method and device, an ink jet printer incorporating the device, a printing cost-calculating system, and a coloring material supply management system, according to the invention are applied to a printed matter-issuing system 1.

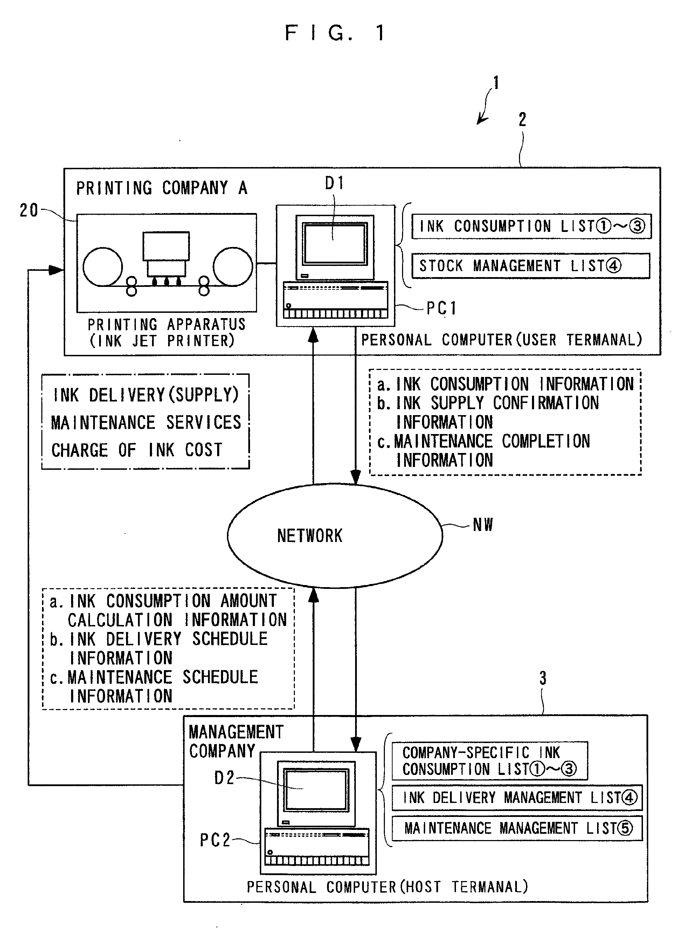

Referring first to FIG. 1, the printed matter-issuing system 1 is comprised of a management company 3 which operates/manages the system 1, a network NW, and a plurality of printing companies 2 (only one of which is shown in the figure) each of which communicates with the management company 2 via the network NW, for transmitting and receiving various kinds of information, and prepares printed matter (i.e. consumes ink). The management company 3 receives from each of the printing companies 2 information of ink (coloring material) consumed by a printing apparatus 20 (ink jet printer), to thereby manage ink consumption, and makes a charge for ink cost (printing cost) according to the amount of ink consumed. Further, the management company 3 supplies ink to and executes maintenance services for the printing company 2, according to the amount of ink consumed.

The printing company 2 is comprised of the printing apparatus 20 for preparing printed matter and a personal computer 1 (user terminal: hereinafter referred to as "the PC 1") connected to the printing apparatus 20 via an interface and used for communication via the network NW. The printing apparatus 20 is implemented by an ink jet printer which ejects ink particles from a plurality of thin nozzles arranged on an ink jet head, to thereby carry out printing on a print medium brought to a position opposed to the nozzles. The PC 1 stores information of the amount of ink consumed by the ink jet printer 20 and displays the information on a display D1.

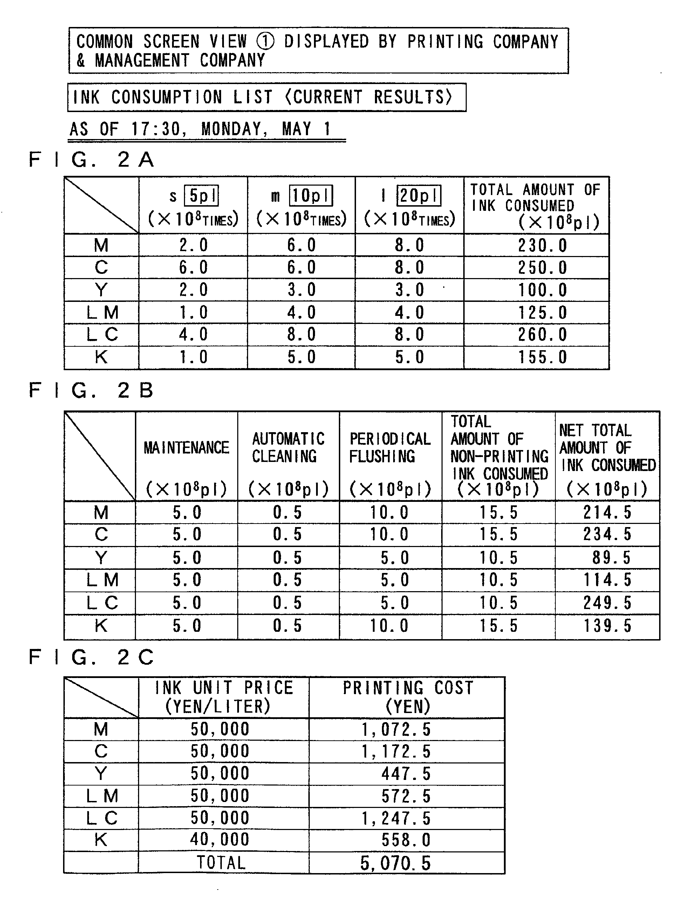

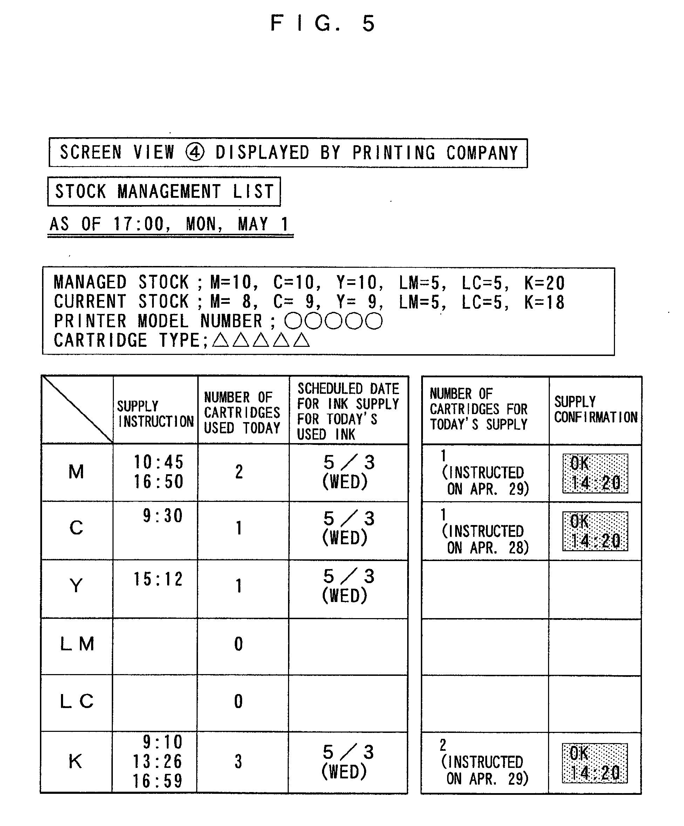

Further, the PC 1 transmits the information of the amount of ink consumed by the ink jet printer 20, information confirming that ink has been supplied, and information confirming that maintenance services have been executed (hereinafter referred to as "a. ink consumption information", "b. ink supply confirmation information" and "c. maintenance completion confirmation information" , respectively) to the management company 3. Moreover, the PC 1 is capable of displaying various kinds of information from the management company 3 on the display D1. The contents of the information displayed are exemplified in "ink consumption lists" shown in FIGS. 2A to 2C, 3, and 4, and a "stock management list" shown in FIG. 5, all of which will be described in detail hereinafter.

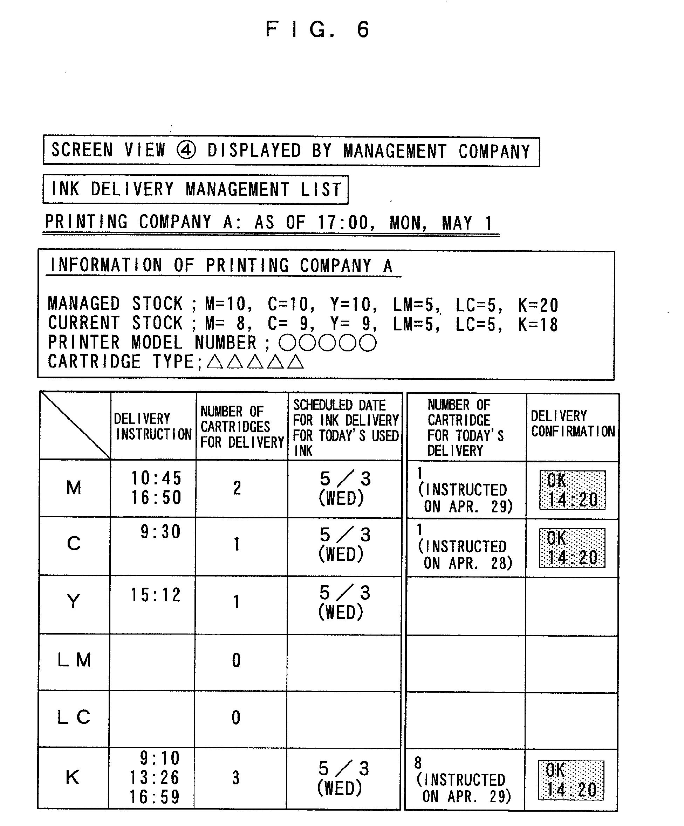

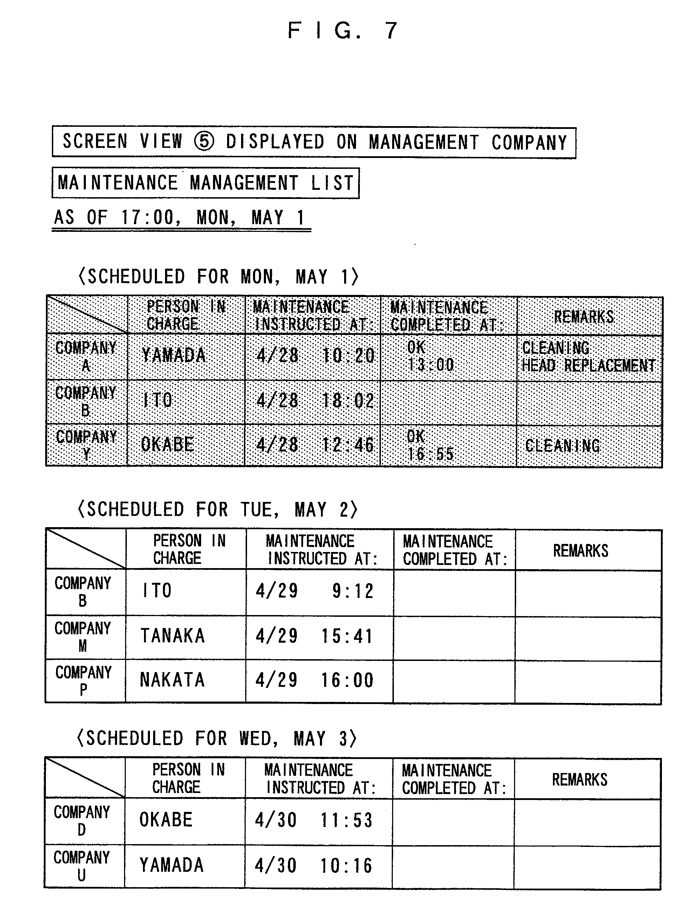

The management company 3 has a personal computer 2 (host terminal: hereinafter referred to as "the PC 2") capable of performing communication with the PC 1 of the printing company 2 via the network NW. The management company 3 receives the information of ink consumption from the printing company 2 and performs various management operations including those for issuing an ink delivery (supply) instruction, and a maintenance service execution instruction, and charging the cost of ink consumed, based on the information received from the printing company 2. More specifically, the management company 3 (PC 2) sends to the printing company 2 (PC 1) information of total results calculated based on "a. ink consumption information" received from the printing company 2, information of an ink supply schedule, and information of an execution schedule for maintenance services (hereinafter referred to as "a. ink consumption calculation information", "b. ink delivery schedule information" and "c. maintenance schedule information" , respectively). Further, the management company 3 delivers (supplies) ink (to the printing company 2), executes maintenance services, and charges the cost of ink consumed. Similarly to the PC 1, the PC 2 is capable of displaying various kinds of information on a display D2 thereof. The contents of the information displayed are exemplified in the "(company-specific) ink consumption lists" shown in FIGS. 2A to 2C, 3, and 4, an "ink delivery management list" shown FIG. 6, and a "maintenance management list" shown in FIG. 7, all of which will be described in detail hereinafter.

The network NW is constructed by the Internet or a LAN. The utilization of an existing network system makes it possible to eliminate the need for constructing a new network. Further, utilization of a WAN such as the Internet makes it possible to easily perform business operation over a further-expanded area. Needless to say, it is also possible to construct a new network for the present system 1.

Now, the printing apparatus 20 used by the printing company 2 will be described. In the present embodiment, as described hereinabove, the printing apparatus 20 is implemented by an ink jet printer which is capable of color printing. The printing apparatus 20 carries out printing on a print medium by ejecting ink from the ink jet head (nozzles), to thereby prepare printed matter. Printing ink for use in the apparatus 20 includes six color inks of M (magenta) color, C (cyan) color, Y (yellow) color, LM (light magenta) color, LC (light cyan) color and K (black) color, each of which is provided in a state contained in an ink cartridge. Therefore, when an ink is running out, it is not required to supply all the six inks, but it is possible to supply only the insufficient ink.

Shortage of ink is determined based on the amount of ink consumed. More specifically, when cartridges each containing 1 liter of ink are in use, the amount of ink remaining in each of the ink cartridges is calculated by subtracting the amount of ink consumed from the ink cartridge from the initial amount of ink, and if the calculated amount is very close to 0 (liters), it is determined that the ink is insufficient. A cartridge which is short of ink is removed by a user for replacement with a new one. The ink jet printer 20 suspends the printing process during the replacement operation, and resumes the printing process immediately after completion of the loading of the new cartridge having been detected.

Immediately before the restart of the printing process, the ink jet printer 20 carries out "automatic cleaning" to maintain excellent ink ejection from the ink jet head (nozzles) (i.e. to prevent nozzle clogging by ink). The "automatic cleaning" is performed by bringing an ink suction cap into contact with the ink jet head from below to suck ink therefrom in a state of the ink jet head having been moved to a home position thereof from a position opposed to a print medium. The sucked ink is collected in a waste ink storage tank connected to the ink suction cap. Therefore, it is preferred that when the amount of waste ink stored in the waste ink storage tank has exceeded a predetermined amount, a serviceman removes the waste ink from the tank during execution of maintenance services. It should be noted that the "automatic cleaning" is executed not only after replacement of cartridges (or before restart of a printing process) but also immediately after the power is turned on. Further, when blur of print is becoming conspicuous, the user can provide an instruction to forcibly carry out "automatic cleaning".

In addition to the "automatic cleaning", the ink jet printer 2 carries out "periodical flushing" by ejecting a predetermined amount of ink periodically, so as to prevent nozzle clogging (or to prevent ink from being dried). The "periodical flushing" is executed by ejecting the predetermined amount of ink at time intervals of 10 to 20 seconds during a printing process, in a state of the ink jet head having been moved to an ink disposal position. Arranged at the ink disposal position is a waste ink storage container filled with a waste ink absorber. The ejected ink is absorbed in the waste ink absorber. Therefore, it is preferred that when the waste ink absorber is saturated with waste ink, a serviceman removes the waste ink absorber during execution of maintenance services and replaces the same with a new one. It should be noted that the periodical flushing can also be carried out by ejecting ink toward a non-image portion of a print medium, so as to shorten a time period for removing the ink jet head to the ink disposal position.

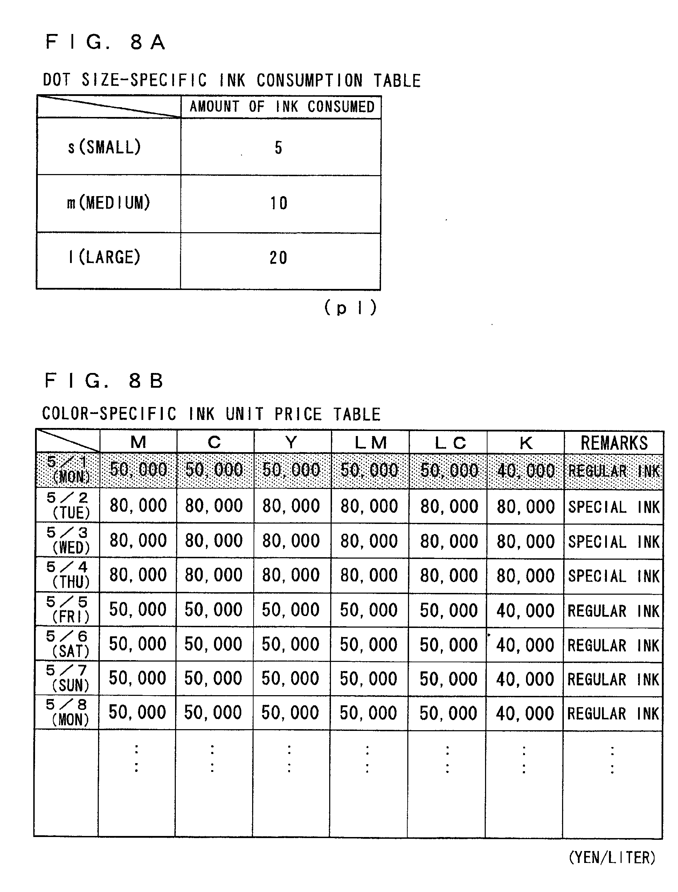

Next, description will be given of a method of calculating the amount of ink consumed by the ink jet printer 20. As shown in a "dot size-specific ink consumption table" in FIG. 8A, the printer 20 is capable of ejecting 5-pl (picoliter) ink droplets, 10-pl ink droplets, or 20-pl ink droplets for each ejecting operation to thereby form an s-size(small-size) dot, an m-size(medium-size) dot, and an 1-size(large-size) dot, respectively. Therefore, the amount of ink consumed is calculated by multiplying the ink unit ejection amounts (dot sizes) by the respective corresponding number of times of ejection and then adding up the results (ink unit ejection amount-specific amounts of ink consumed) obtained by the respective multiplications. Further, the calculation of the amount of ink consumed is executed separately (see FIG. 2A) for each of the six colors of ink.

It should be noted that the number of types of ink unit ejection amounts (dot sizes) is not limited to the above three, but more than three types of unit ejection amounts may be set. Similarly, the number of kinds of ink colors is not limited to the above six, but only M, C, Y and K may be used, or more than six colors may be used.

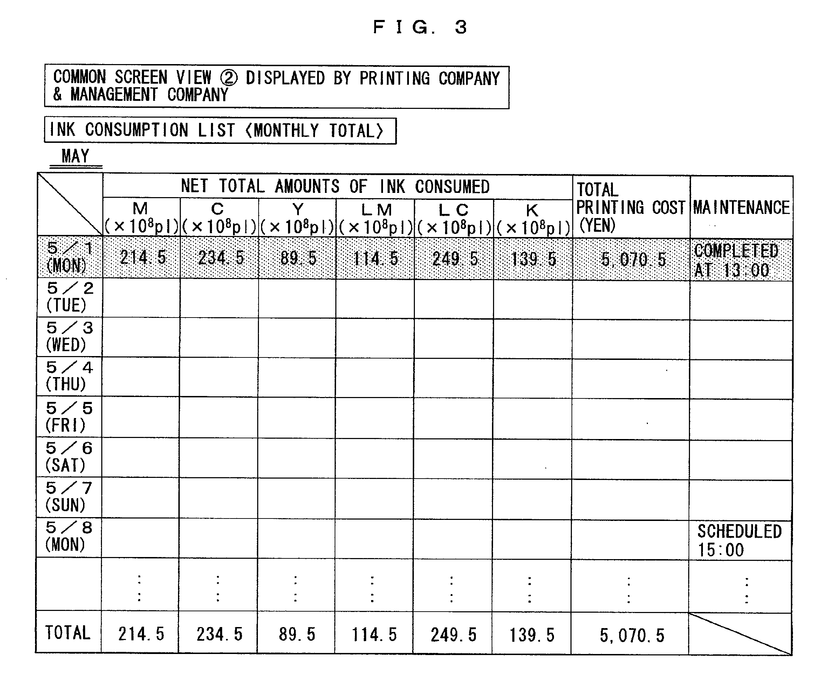

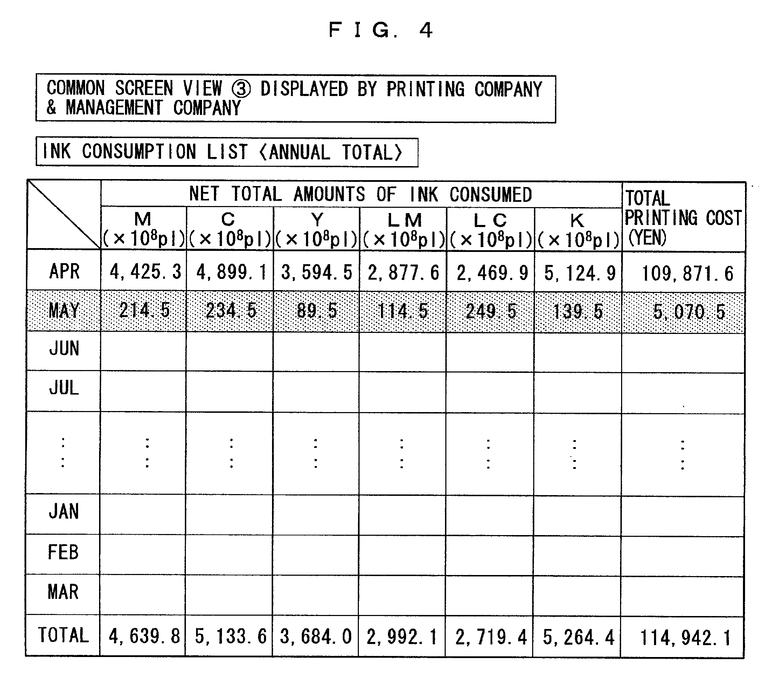

The information of the amount of ink consumed calculated as above (i.e. "a. ink consumption information") is displayed on the display D1 of the PC 1. At the same time, the information is transmitted to the management company 3 via the network NW and displayed on the display D2 of the PC 2. In short, the same contents (screen view) of the information of the amount of ink consumed can be confirmed on both the PC 1 and the PC 2. Further, information of a current printing cost (see FIG. 2C), a monthly total printing cost (see FIG. 3), and an annual total printing cost (see FIG. 4) each calculated based on "a. ink consumption information" by the management company 3 is displayed on the display D2 of the PC 2. At the same time, the information is transmitted to the printing company 2 via the network NW to be displayed on the display D1 of the PC 1. In short, the contents (screen view) of these kinds of information can also be confirmed identically on both the PC 1 and the PC 2.

Next, a method of managing ink delivery (supply) will be described. The management company 3 having received "a. ink consumption information" from the printing company 2 carries out instructing and managing operations for ink delivery based on "a. ink consumption information". As described hereinbefore, the printing company 2 is capable of determining ink shortage on an ink color-by-ink color basis by calculating the remaining amount of each color ink by subtracting the amount of the ink consumed from the ink cartridge from the initial amount of the ink. When having obtained results of calculation indicating that the remaining amount of an ink is scarce (e.g. less than 0.05 (liters)), the management company 3 gives a supply instruction (ink cartridge replacement instruction) to the printing company 2. As shown in a "stock management list" in FIG. 5, the supply instruction is provided by displaying a designated supply time in red on a ink color-by-ink color basis (see a "supply instruction" column). The user of the printing company 2 confirms the supply instruction to thereby judge ink shortage.

For instance, when instructed to supply an ink cartridge of M color (i.e. when the designated supply time corresponding to the ink is displayed in red), the user changes M-color cartridges. When this cartridge replacement is completed, the ink jet printer 20 detects the completion of the replacement operation, and then the information of the fact is transmitted to the management company 3 (PC 2) via the PC 1 and the network NW. Then, the number of times of cartridge replacement is displayed as a "number of cartridges used today" on the display D1 of the PC 1, and as a "number of cartridges for delivery" on the display D2 of the PC 2 (see an "ink delivery management list" in FIG. 6). Although in the present example, the information of the above cartridge replacement is practically indicative of a request to the management company 3 for ink cartridge delivery, the management company 3 may execute ink cartridge delivery (supply) without confirming the cartridge replacement (i.e. simply based on determination as to ink shortage). In this case, however, it is preferred that a contract (allowing the management company 3 to supply ink cartridges without prior permission of the printing company 2) should be made in advance between the printing company 2 and the management company 3.

Further, the management company 3 transmits information of a schedule for delivering a number of M-color cartridges corresponding in number to the number of the used cartridges (i.e. "b. ink delivery schedule information") to the printing company 2, as well as displays the information on the display D2 (see a "scheduled date for ink supply for today's used ink" column in FIG. 5 and a "scheduled date for ink delivery for today's used ink" column in FIG. 6). The lists (the "stock management list" in FIG. 5 and the "ink delivery management list" in FIG. 6) for display on the respective displays D1, D2 will be described in detail hereinafter.

Next, a method of managing maintenance services will be described. The management company 3 carries out instructing and managing operations for maintenance services based on "a. ink consumption information" sent from the printing company 2. As described hereinbefore, "a. ink consumption information" includes information of the number of times of ejection of each color ink (see FIG. 2A). The management company 3 issues an instruction for execution of maintenance services when the total number of times of ejection of a color ink (i.e. the total of the respective numbers of times of ink ejection for s-size dots, m-size dots and 1-size dots) has reached a predetermined number (e.g. 1 x 10¹⁰ (times)).

A date for execution of the maintenance services is set to a third day after issuing the instruction for execution of the maintenance services. The schedule is displayed as shown in a "maintenance management list" in FIG. 7, so that the management company 3 (PC 2) can confirm the schedule on the display D2. Further, the management company 3 transmits information of the schedule for execution of the maintenance services ("c. maintenance schedule information") to the printing company 2. Therefore, the printing company 2 (PC 1) can also confirm the schedule on the display D1 (see a "maintenance" column of the "ink consumption list <monthly total>" in FIG. 3; it should be noted that the illustrated schedule is one which should be displayed assuming that the instruction for execution of the maintenance services is issued on May 5, and hence it is not actually shown in the FIG. 3 list which is assumed to show the status as of May 1.). The list ("maintenance management list" in FIG. 7) for display on the display 2 will be described in detail hereinafter.

Next, a method of calculating an ink cost (printing cost) will be described. The ink cost can be calculated by multiplying the amounts of consumption of the respective color inks by the corresponding ink unit prices. The ink unit prices are set as shown in a "color-specific ink unit price table" in FIG. 8B. The ink unit prices are set on a daily basis, because different kinds of inks can be used on each day. Each ink unit price is variable or can be changed in a floating manner due to other various conditions (including a discount on ink cost due to overstock in the management company 3 and a discount profitable both for the management company 3 and a particular printing company 2, such as a discount given to the particular printing company 2 to which an increased number of ink cartridges have been supplied). Thus, the ink unit prices can be changed whenever the situation changes. Further, it is possible to change ink unit prices according to hours set within a day.

In the present embodiment, the ink cost (printing cost) is calculated not simply by multiplying the total amounts of the respective color inks consumed, by the corresponding ink unit prices, but based on the amount of ink actually used for preparation of printed matter. More specifically, the printing cost is calculated based on the amount of ink consumed which is obtained by subtracting the amount of ink used for other purposes than printing from the total amount of ink consumed.

Now, description will be given of "the amount of ink used for other purposes than printing (amount of non-printing ink consumed)". As shown in FIG. 2B, the amount of non-printing ink consumed includes "the amount of ink used for test printing and the like during execution of maintenance services (shown under "maintenance")", "the amount of ink sucked for automatic cleaning (shown under "automatic clearing")" and "the amount of ink ejected for periodical flushing (shown under "periodical flushing")". Therefore, by adding up the amounts of the ink used for the respective operations, it is possible to calculate "the amount of ink used for other purposes than printing (total amount of non-printing ink consumed)".

Needless to say, when no maintenance services have been performed, "the amount of ink used for execution of the maintenance services" is equal to 0. The amount of ink used for "maintenance" or "periodical flushing" can be calculated, similarly to the calculation of the amount of ink consumed, by multiplying the ink unit ejection amounts corresponding to the respective dot sizes (s, m, l) by the respective corresponding number of times of ejection and then adding up the results obtained by the respective multiplications. In "maintenance" or "periodical flushing", however, the unit ejection amounts of ink are not always required to correspond to the respective dot sizes (s, m, l), but each unit ejection amount may be set to a different value from that for normal printing. On the other hand, the amount of ink used for "automatic cleaning" is determined by calculating the amount of ink sucked by the suction cap.

After "the amount of ink used for other purposes than printing (total amount of non-printing ink consumed)" has been calculated as described above, "the amount of ink actually used for preparation of the printed matter (net total amount of ink consumed)" is calculated by subtracting the total amount of non-printing ink consumed from the total amount of ink consumed. Then, "the net total amount of ink consumed" of each color ink is multiplied by a corresponding unit price shown in the "color-specific ink unit price table" in FIG. 8B, whereby an ink cost (printing cost) of the color ink can be calculated (see FIG. 2C).

Although in the above embodiment, a printing cost for each color is calculated by multiplying the corresponding ink unit price by the corresponding ink consumption amount (net total amount of ink consumed), by using the "color-specific ink unit price table" (see FIG. 8B) which associates ink colors with respective ink unit prices, the color-specific printing costs may be calculated by using (consulting) an "ink price table (coloring material price table)" associating amounts of ink consumed with respective color-specific ink prices corresponding to the amounts. According to this method, simply by consulting the table, it is possible to calculate the color-specific printing costs without using any calculation programs.

Next, description will be given of the lists for display on the display D1 of the PC 1 and the display D2 of the PC 2. As described hereinabove, the printing company 2 (PC 1) can display the "ink consumption lists" shown in FIGS. 2A to 2C, 3 and 4 and the "stock management list" shown in FIG. 5, while the management company 3 (PC 2) can display not only the "ink consumption lists" shown in FIGS. 2A to 2C, 3 and 4, but also the "ink delivery management list" shown in FIG. 6 and the "maintenance management list" shown in FIG. 7.

The "ink consumption lists" are classified into the "current results" in FIGS. 2A to 2C, the "monthly total" in FIG. 3, and the "annual total" in FIG. 4. The "monthly total" and the "annual total" are obtained based on the total of the "current results" in FIGS. 2A to 2C. The management company 3 (PC 2) actually prepares "ink consumption lists" for each company. However, illustrated here are the only "ink consumption lists" prepared for "printing company A". Therefore, on the part of the management company 3 (PC 2), it is preferred that the name or the like of the "printing company A" which indicates that the lists belong to the "printing company A" is displayed somewhere (e.g. as a title) in each of the lists. In this connection, a display screen view displayed on the part of the printing company 2 (PC 1) is assumed to be one displayed in the "printing company A".

As shown e.g. in FIG. 2A to 2C, these lists are all displayed as lists made as of Monday, May 1, 17:30 (the contents of the lists are updated as time elapses). Referring first to FIG. 2A, the number of times of ink ejection for each color and for each unit ejection amount (each of the dot sizes: s size, m size and 1 size) is counted, and then the counted number of times of ink ejection is multiplied by the corresponding unit ejection amount, to thereby calculate a "total amount of ink consumed" for each color. The "total amount of ink consumed" indicates the entire amount of each ink consumed for any purpose on the day (before 17:30).

The dot size-specific unit ejection amounts are obtained by consulting the "dot size-specific ink consumption table" shown in FIG. 8A, which associates dot sizes with respective amounts of ink consumed. In FIG. 2A, values shown in an "s" column, an "m" column and an "1" column are information calculated (counted) by the PC 1, while values in a "total amount of ink consumed" column are information calculated by the PC 2 by consulting the "dot size-specific ink consumption table" (stored in the PC 2).

FIG. 2B shows results obtained by counting "the respective amounts of inks used for other purposes than printing (total amounts of non-printing ink consumed)". More specifically, in the figure, the amounts of each color ink consumed respectively for "maintenance", "automatic cleaning" and "periodical flushing" are shown, and the total of the amounts is shown as a "total amount of non-printing ink consumed". Further, each "net total amount of ink consumed" is obtained by subtracting the corresponding "total amount of non-printing ink consumed" from the corresponding "total amount of ink consumed" in FIG. 2A. In FIG. 2B, values shown in a "maintenance" column, an "automatic cleaning" column and a "periodical flushing" column are information calculated (counted) by the PC 1, while values in a "total amount of non-printing ink consumed" column and a "net total amount of ink consumed" column are information calculated by the PC 2, based on the information calculated (counted) by the PC 1.

FIG. 2C shows each "printing cost" obtained by multiplying a "net total amount of ink consumed" for each color by the corresponding "ink unit price". The "ink unit price" is a value obtained by consulting the "color-specific ink unit price table" shown in FIG. 8B, which associates the ink colors with respective ink unit prices. Further, the six printing costs calculated on a color-by-color basis by consulting the table are added up to obtain a total printing cost (5,070.5 (yen)). The total printing cost indicates printing cost required for preparation of the printed matter as of 17:30 on May 1. In FIG. 2C, values displayed in a "ink unit price" column are information obtained from the "color-specific ink unit price table" stored in the PC 2, while values in a "printing cost" column are information calculated by the PC 2, based on the information from the table.

FIG. 3 shows the "ink consumption list <monthly total>" in which the total of daily ink consumption amounts of the month is calculated based on the "current results" in FIGS. 2A to 2C. In the list, a row for data of today (Monday, May 1) is displayed in a shaded manner. Each ink consumption amount displayed in the row indicates an "amount of ink actually used for preparation of the printed matter (net total amount of ink consumed)". Further, a value displayed as a "total printing cost" is identical to one displayed in the final row of the FIG. 2C list.

In the "ink consumption list <monthly total>", the date and time of execution (completion) of maintenance services and the scheduled date and time for execution of maintenance services are displayed. More specifically, when a serviceman from the management company 3 issues an instruction for completion of maintenance (e.g. by depressing a maintenance completion button), the time of execution of the maintenance and a message indicative of completion of the maintenance ("completed at 13:00" in the illustrated example of Monday, May 1) are displayed on the PC 1. At the same time, this information is sent to the management 3 (PC 2) so as to be reflected in the FIG. 7 "maintenance management list" (see a "maintenance completion" column). Further, the PC 1 displays the scheduled date and time, based on information received from the management 3. In the final row "total" of the present list, monthly totals (as of Monday, May 1, 17:30) of respective columns are displayed. Each value displayed in the list is information calculated by the PC 2.

FIG. 4 shows the "ink consumption list <annual total>" in which the total of monthly ink consumption amounts of the year is calculated based on data of the "monthly total" in FIG. 3. In the list, a row for data of the present month (May) is displayed in a shaded manner. Each amount of ink consumed displayed in the row is identical to the corresponding value shown in the final row "total" of the FIG. 3 list. The management company 3 charges the cost of ink to the printing company 2, based on an amount of money shown in a "total printing cost" column. For example, the printing company 2 is charged 109,871 (yen) as an ink cost for April (decimal fraction being omitted; the decimal fraction may also be omitted on the displays D1 and D2). Further, in the final row "total" of the "ink consumption list <annual total>", annual totals of respective columns are displayed. Each value displayed in the list is information calculated by the PC 2.

FIG. 5 shows the "stock management list" which can be displayed for confirmation by the printing company 2 (PC 1). The "stock management list" corresponds to the FIG. 6 "ink delivery management list" which can be displayed for confirmation by the management company 3 (PC 2). The upper table of the "stock management list" shows "managed stock" (the number of ink cartridges to be stored as a stock), "current stock" (the number of ink cartridges currently stored as the stock), "printer model number", and "cartridge type".

In the lower left-hand table of the "stock management list", when it is determined that an ink cartridge is short of ink, the time of day is displayed in red on a color-by-basis (see the "supply instruction" column). Then, when the ink cartridge is replaced with a new one by the user, the number of cartridges used for the color is incremented and displayed in the "number of cartridges used today" column, and at the same time, the time displayed in red in the "supply instruction" column is turned into black. Information of the ink shortage (i.e. a supply instruction) is transmitted by the management company 3 to update related display, while information ("b. ink supply confirmation information") indicative of execution of cartridge replacement is transmitted from the printing company 2 to the management company 3 to update display concerning cartridge replacement (the number of cartridges used today). Further, the management company 3 (PC 2) responds to the information received from the printing company 2 (PC 1), by transmitting information ("b. ink delivery schedule information") of a scheduled date for delivery (supply) of ink cartridges. The information from the management company 3 is displayed in the "scheduled date for ink supply for today's used ink" column. FIG. 5 shows that two M ink cartridges, one C ink cartridge, one Y ink cartridge and three K ink cartridges are to be delivered on Wednesday, May 3.

On the other hand, the lower right-hand table shows schedules for cartridge supply. In the case of M color, for example, the figure shows that one ink cartridge of which the supply instruction was transmitted on April 29 was scheduled to be supplied today (see a "number of cartridges for today's supply" column), and that the supply was confirmed at 14:20 (see the "supply confirmation" column). At a time point the printing company 2 has confirmed a cartridge supply, i.e. at a time point information indicative of the fact has been sent to the management company 3 (e.g. by depressing a color-specific supply confirmation button), the corresponding data in the "supply confirmation" column is displayed in a shaded manner.

FIG. 6 shows the "(company-specific) ink delivery management list" which can be displayed for confirmation by the management company 3 (PC 2). The upper table of the list shows identical information to the information in the upper table of the FIG. 5 "stock management list". Further, the upper table shows that the list belongs to the "printing company A". A "delivery instruction" column, a "number of cartridges for delivery" column and the "scheduled date for ink delivery for today's used ink" column in a lower right-hand table of the "ink delivery management list" correspond, respectively, to the "supply instruction" column, the "number of cartridges used today" column and the "scheduled date for ink supply for today's used ink" column in the lower left-hand table of the "stock management list". Similarly, a "number of cartridges for today's delivery" column and a "delivery confirmation" column in a lower right-hand table of the "ink delivery management list" correspond, respectively, to the "number of cartridges for today's supply" column and the "supply confirmation" column in the lower right-hand table of the "stock management list".

FIG. 7 shows the "maintenance management lists" which can be displayed for confirmation by the management company 3 (PC 2) in which a list for today (May 1 in the illustrated example) is displayed in a shaded manner. Each list shows schedules for maintenance services to be executed on the corresponding day. The "maintenance management lists" shown in FIG. 7 shows the status of May 1, and hence lists for May 2 et seq. show only schedules. For example, a person who was in charge of the "printing company A" on Monday, May 1 was "Yamada" as shown in a "person in charge" column, and an instruction for providing maintenance services to the "printing company A" was issued at 10:20 on April 28 as shown in a "maintenance instruction" column. A maintenance instruction is issued when the number of times of ink ejection for each color has reached a predetermined number (e.g. 1 x 10¹⁰ (times)), and the information ("c. maintenance schedule information") is sent to the printing company 2 to be reflected in the FIG. 3 "ink consumption list <monthly total>" (see the "maintenance" column).

In the "maintenance completion" column, a time of day at which maintenance services are completely executed is displayed when the information ("c. maintenance completion confirmation information") has been transmitted from the printing company 2. Further, in a "remarks" column, specific pieces of information of maintenance services (e.g. cleaning and head replacement for the printing company A) are displayed. The information displayed in the "remarks" column is based on information which was sent from the ink jet printer 20 to the PC 2 via the PC 1 as a result of self-inspection performed by the ink jet printer 20 for inspecting portions thereof requiring maintenance services. Alternatively, contents of a report which a serviceman in charge of the maintenance services made e.g. by telephone may be displayed in the "remarks" column.

As described above, the printed matter-issuing system 1 enables the printing company 2 and the management company 3 to exchange various kinds of information via the network NW and confirm the information on the respective displays D1 and D2. Therefore, even when the printing company 2 and the management company 3 are remote from each other, it is possible for the management company 3 to promptly grasp the amount of ink consumed by the printing company 2 and efficiently carry out various management operations such as ink delivery (supply), maintenance services, calculation of ink costs (printing costs), and so forth.

Further, the management company 3 carries out proper (accurate) ink supply suitable for the printing apparatus 20, which prevents the printing company 2 from supplying improper ink to the printing apparatus 20 erroneously. More specifically, it is possible to prevent degradation of printing quality or breakdown of the apparatus e.g. due to clogging of the ink jet head (nozzles) or a malfunction in the ink circulation system, which is likely to be caused by the use of improper ink.

Further, according to the ink consumption amount-calculating method and device of the invention, and the ink jet printer incorporating the same, since the management company 3 counts the number of times of ink ejection from the ink jet head, and then calculates the amount of ink consumed based on the counted number of times, it is possible to accurately calculate the amount of ink consumed. In addition, since the numbers of times of ink ejection are calculated on a unit ejection amount-by-unit ejection amount basis (dot size-by-dot size basis), even when the amount of ink ejected from the ink jet head for each ejecting operation is not fixed or uniform, the amount of ink consumed can be calculated with accuracy.

Further, according to the coloring material supply management system of the invention, since the printing company 2 utilizes the network to transmit information of the amount of ink consumed to the management company 3, the management company 3 can carry out (or give an instruction for) ink supply efficiently for the printing company 2 (printing apparatus 20) which is located remote from the management company 3. On the other hand, since the management company 3 utilizes the network to transmit information concerning the instruction for ink supply to the printing company 2, the printing company 2 can perform efficient and prompt management (stock management) associated with ink consumption and supply.

Further, the system enables the management company 3 to issue an instruction for execution of maintenance services for the printing apparatus 20 (owned by the printing company 2) when it is detected that the total amount of ink consumed has reached a predetermined amount. That is, since maintenance services are provided according to the amount of ink consumed, it is possible to check the printing apparatus 20 in proper timing. Besides, since ink supply and maintenance services can be executed in a parallel fashion, it is possible to improve operational efficiency.

Furthermore, according to the printing cost-calculating system of the invention, since the management company 3 supplies ink to the printing company 2 based on an ink consumption amount calculated by the printing apparatus 20, the printing company 2 can save time and labor conventionally required for management of ink consumed by its own printing apparatus 20, and is stably supplied with ink at the same time. On the other hand, the management company 3 can carry out calculation of printing costs and ink supply in a parallel fashion, which makes it possible to improve operational efficiency.

Moreover, the printing cost (ink cost) is calculated based on the amount of ink consumed which is calculated by subtracting the amount of ink consumed for other purposes ("maintenance", "automatic cleaning", "periodical flushing", and so forth) than preparation of printed matter from the total amount of ink consumed by the printing apparatus 20 (i.e. based on the amount of ink actually consumed for preparation of the printed matter), so that the printing company 2 is not required to pay for wasted ink, and hence no disadvantage occurs to the printing company 2.

Although in the above embodiment, the amounts of ink consumed are calculated (totalized) by the management company 3 (PC 2), the printing company 2 (PC 1) may calculate the "totals amount of ink consumed" in FIG. 2A and the "total amounts of non-printing ink consumed" and "net totals amount of ink consumed" in FIG. 2B, and then calculate the "printing costs (and the total printing cost)" based on the obtained values. In this case, only information of the result (total printing cost) may be sent to the management company 3. According to this method, it is possible to reduce the amount of information to be transmitted, thereby enabling smooth exchange of information between the printing company 2 and the management company 3.

It should be noted that in the above case (where the total printing cost is calculated by the printing company 2), the printing company 2 is required to have information of ink unit prices. Therefore, it is preferred that the ink jet printer 20 is capable of detecting the kind of an ink cartridge (i.e. the kind of an ink) when the cartridge is mounted therein, and that the ink unit prices are set to uniform values on an ink kind-by-ink kind basis. According to this method, the printing company 2 can check on the ink unit prices. In this connection, the kind of an ink is not always required to be detected by the ink jet printer 20, but it may be confirmed by the user's visual recognition of the name of the ink kind written on a cartridge or the like.

Further, in the above case (where the printing company 2 sends only information of the total printing cost to the management company 3), since the management company 3 cannot manage the timing for executing maintenance services, it is preferred that the printing company 2 makes a request for execution of maintenance services, or alternatively maintenance services are executed periodically regardless of the amount of ink consumed (ejected). In addition, accurate management of ink supply is difficult to the management company 3 (the management company 3 cannot calculate the amount of ink consumed accurately only from the information of the total printing cost), and hence it is preferable that the printing company 2 makes a request for ink supply in proper timing.

Although in the above embodiment, when a total number of times of color-specific ink ejection has reached a predetermined number (e.g. 1 x 10¹⁰ (times)), an instruction for execution of maintenance services is issued by the management company 3, this is not limitative, but maintenance services may be executed when it is detected by counting the number of times of ink ejection from each nozzle that the number of times of ink ejection from any one of the nozzles has reached a predetermined number. Alternatively, maintenance services may be executed when the total number of times of ink ejection from all the nozzles for all the colors has reached a predetermined number.

Further, although in the above embodiment, a printing cost is calculated based on the amount of ink consumed excluding the respective amounts of ink consumed for "maintenance", "automatic cleaning" and "periodical flushing", any or all the amounts of ink consumed for the non-printing purposes may be included in the amount for calculation of the printing cost under an agreement between the management company 3 and the printing company 2. In short, it is possible to charge the cost of all ink consumed by the printing apparatus 20 to the printing company 2.

The management company 3 may take charge of the amount of ink sucked for "automatic cleaning", and issue an instruction for execution of a maintenance service for removing waste ink from the waste ink storage tank (storing sucked waste ink) when it is detected that the amount of waste ink stored in the tank has exceeded a predetermined amount. In this case, it is preferred that information of a schedule for execution of the maintenance service (preferably including the details of the service) is sent to the printing company 2. Similarly, the management company 3 may take charge of the amount of ink ejected for "periodical flushing", and issue an instruction for execution of a maintenance service for replacing the waste ink absorber (absorbing ejected waste ink) with a new one when it is detected that the waste ink absorber has become saturated. In this case as well, it is preferred that information of a schedule for execution of the maintenance service is sent to the printing company 2. According to these methods, since the amount of waste ink stored in the waste ink storage tank and the amount of ink absorbed in the waste ink absorber are taken charge of by the management company 3, the printing company 2 can save time and labor required for maintenance management for the printing apparatus 20.

Further, although in the above embodiment, ink is delivered (supplied) by the management company 3, this is not limitative but the management company 3 may instruct another company (separate from the management company 3) specializing in ink delivery (supply) to deliver the ink. In this case, it is preferred that the ink delivery (supply) company is allowed to consult the "ink delivery management list" shown in FIG. 6. Similarly, the management company 3 may instruct another company (separate from the management company 3) specializing in maintenance services to execute maintenance services. In this case, it is preferred that the maintenance service company is allowed to consult the "maintenance management lists" shown in FIG. 7. According to these methods, since the companies are in charge of the respective services, it is possible to provide substantial or complete services for the printing company 2.

Further, in place of the system configuration in which the management company 3 and the printing company 2 are connected to each other via the network as shown in FIG. 1, the system 1 may have another system configuration in which the printing apparatus 20, the PC 1 for counting the amount of ink consumed by the printing apparatus 20, and the PC 2 for calculating the printing cost based on the amount of ink consumed are connected to each other simply via interfaces. This system 1 forming a simple network can be utilized e.g. when the printing company 2 just wants to obtain information about costs of consumables used for preparation of printed matter, within the company itself.

In this case, the interface can be implemented by communication means based on a communication standard, such as an RS-232C interface, a USB interface, an IEEE1394 interface or a Centronics interface. Therefore, it is preferred that the printing apparatus 20 is compatible with these interface standards (including ones compliant with the standards). In the system, the printing apparatus 20 is compatible with both serial data communication means (RS-232C, USB, IEEE1394, etc.) and parallel data communication means (Centronics, etc.). Needles to say, it is also possible to utilize wireless communication means as an interface.

Further, a storage medium (CD-ROM, MO, or the like) or printer driver software storing algorithms of the ink consumption amount-calculating method may be used. Alternatively, a storage medium (ROM or the like) storing the algorithms may be incorporated in the printing apparatus 20. More specifically, by integrating various functions (a communication function, a display function, etc.) into the printing apparatus 20, the printing company 2 can utilize the system 1 implemented by the printing apparatus 20 alone (without any need to use a terminal device, such as a personal computer or the like).

Further, information may be exchanged exclusively at a time when the management company 3 or the printing company 2 carries out an operation for exchange of information (i.e. at a time when one of the two companies 2 and 3 desires to transmit or receive information), or alternatively at any time. In the former case, a charge for connection to the network NW can be reduced (when connection to the network NW is charged for), and high security can be ensured, while in the latter case, both the management company 3 and the printing company 2 can always obtain the most up-to-date information, which makes it possible to speed up operations (processing).

Although in the above embodiment, ink is supplied in units of cartridges (in units of liters), it may be supplied according to the amount of ink consumed. In this case, for example, when the amount of ink consumed by the printing company 2 for one day is 0.2 liters, 0.2 liters of ink are supplied by the management company 3 on the following day (in this case, not an ink cartridge containing ink but ink itself is supplied). According to this method, it is possible to supply an amount of ink which suits the scale (ink consumption) of a printing company. Further, since ink is supplied according to the amount of ink consumed, degradation of ink can be prevented.

Further, when the printing apparatus 20 is formed by an ink jet printer as in the above embodiment, it is preferable that the printing apparatus 20 is implemented by an ink jet printer of a (piezoelectric) type which ejects ink by deformation of a piezoelectric element. The piezoelectric ink jet printer utilizes the characteristic of a piezoelectric element which is deformed by application of a voltage, so that it is possible to eject ink droplets straightforward with accuracy as well as to reduce a unit ejection amount for each ejecting operation. In other words, each dot can be reduced in size, which enables printing with high accuracy and high resolution. In addition, since a unit ejection amount for each ejecting operation can be reduced, it is possible to increase the number of times (or frequency) of ink ejection which can be performed within a predetermined time period. Therefore, if the moving speed of the head is increased, it is possible to carry out high-speed printing as long as the resolution is not changed, while if the frequency is increased with the motion of the head maintained at a conventional speed, it is possible to increase the DPI value in the moving direction of the head. Ink for use in the ink jet printer may be dye ink, pigment-based ink, sublimable ink, oil-based ink, UV ink or electrically-conductive water-color ink. Alternatively, special coloring material (ejectable material), such as stealth ink or organic EL, which does not directly form an image.

It is also possible to employ a different type of printer, such as an electrophotographic printer, as the printing apparatus 20. In an electrophotographic printer, toner is used as coloring material. Now, brief description will be given of a toner consumption amount-calculating method for use in the case of an electrophotographic printer being used as the printing apparatus 20. The electrophotographic printer causes a print controller to convert a sheet of information of characters and/or one or more pictures sent from a personal computer or the like to images each formed as a set of microdots with a plurality of sizes, and then turns on/off minute light sources of an optical writing system (laser diodes, LED array, etc.) in response to presence or absence of an image portion corresponding to each dot to thereby transfer the images onto a transfer sheet. Each dot size can be changed according to the length of a time period spent for optical writing. Further, by forming images with color-specific gradations, based on color-separated image signals, such as those indicative of M, C, Y, and K, respectively, and superimposing them one upon another, it is possible to prepare a color print.

Therefore, similarly to the amount of ink consumed by the ink jet printer, the amount of toner consumed by the electrophotographic printer is calculated based on amounts of toner consumed which are counted on a color-by-color basis and on a dot size-by-dot size basis. Similarly, the system configuration employed when an ink jet printer is used as the printing apparatus 20 is applicable to a printing cost-calculating method and management of supply of (toner) cartridges and maintenance services in the case of an electrophotographic printer being used as the printing apparatus 20. It should be noted that toner for use in an electrophotographic printer may be powder toner or liquid toner.

It is further understood by those skilled in the art that the foregoing is a preferred embodiment of the invention, and that various changes and modifications may be made without departing from the spirit and scope thereof.

## Claims

1. An ink consumption amount-calculating method for calculating an amount of ink consumed by an ink jet printer,
the ink consumption amount-calculating method comprising the steps of:
counting a number of times of ink ejection from an ink jet head; and
calculating the amount of ink consumed based on the number of times of ink ejection counted in the step of counting the number of times of ink ejection.

2. An ink consumption amount-calculating method according to claim 1, wherein the ink jet head is capable of ejecting the ink in a plurality of unit ejection amounts,
wherein the step of counting the number of times of ink ejection includes counting numbers of times of ink ejection on a unit ejection amount-by-unit ejection amount basis, and
wherein the step of calculating the amount of ink consumed includes calculating the amount of ink consumed based on the numbers of times of ink ejection counted on a unit ejection amount-by-unit ejection amount basis.

3. An ink consumption amount-calculating method according to claim 2, wherein the step of calculating the amount of ink consumed includes calculating the amount of ink consumed by consulting a unit ejection amount-specific ink consumption table associating respective numbers of times of ink ejection of different unit ejection amounts with respective amounts of ink consumed.

4. An ink consumption amount-calculating method according to claim 1, wherein the ink jet printer is capable of carrying out color printing,
wherein the step of counting the number of times of ink ejection includes counting numbers of times of ink ejection on a color-by-color basis, and
wherein the step of calculating the amount of ink consumed includes the step of calculating the amount of ink consumed based on the numbers of times of ink ejection counted on a color-by-color basis.

5. An ink consumption amount-calculating method according to claim 4, wherein the step of calculating the amount of ink consumed includes calculating the amount of ink consumed by consulting a color-specific ink consumption table associating respective numbers of times of ink ejection for different colors with respective amounts of ink consumed.

6. An ink consumption amount-calculating method according to claim 1, wherein the step of calculating the amount of ink consumed includes calculating the amount of ink consumed, excluding an amount of ink consumed for maintenance operation of the ink jet printer.

7. An ink consumption amount-calculating method according to claim 1, wherein the ink jet head has nozzles for ejecting the ink therefrom, and
wherein the step of calculating the amount of ink consumed includes calculating the amount of ink consumed, excluding an amount of ink consumed for automatic cleaning executed by sucking the ink from the nozzles of the ink jet head.

8. An ink consumption amount-calculating method according to claim 1, wherein the step of calculating the amount of ink consumed includes calculating the amount of ink consumed, excluding an amount of ink consumed for periodical flushing executed by ejecting the ink periodically from the ink jet head.

9. An ink consumption amount-calculating device for calculating an amount of ink consumed by an ink jet printer,
the ink consumption amount-calculating device comprising:
counting means for counting a number of times of ink ejection from an ink jet head; and
calculating means for calculating the amount of ink consumed based on the number of times of ink ejection counted by said counting means.

10. An ink consumption amount-calculating device according to claim 9, wherein the ink jet head is capable of ejecting the ink in a plurality of unit ejection amounts,
wherein said counting means includes means for counting numbers of times of ink ejection on a unit ejection amount-by-unit ejection amount basis, and
wherein said calculating means includes means for calculating the amount of ink consumed based on the numbers of times of ink ejection counted on a unit ejection amount-by-unit ejection amount basis.

11. An ink consumption amount-calculating device according to claim 9, wherein the ink jet printer is capable of carrying out color printing,
wherein said counting means includes means for counting numbers of times of ink ejection on a color-by-color basis, and
wherein said calculating means includes means for calculating the amount of ink consumed based on the numbers of times of ink ejection counted on a color-by-color basis.

12. An inkjet printer comprising:
an ink consumption amount-calculating device for calculating an amount of ink consumed, including:
counting means for counting a number of times of ink ejection from an ink jet head, and
calculating means for calculating the amount of ink consumed based on the number of times of ink ejection counted by said counting means; and
printing means for carrying out printing by using the ink.

13. An ink jet printer according to claim 12, wherein the ink jet head is capable of ejecting the ink in a plurality of unit ejection amounts,
wherein said counting means includes means for counting numbers of times of ink ejection on a unit ejection amount-by-unit ejection amount basis, and
wherein said calculating means includes means for calculating the amount of ink consumed based on the numbers of times of ink ejection counted on a unit ejection amount-by-unit ejection amount basis.

14. An ink jet printer according to claim 12, wherein the ink jet printer is capable of carrying out color printing,
wherein said counting means includes means for counting numbers of times of ink ejection on a color-by-color basis, and
wherein said calculating means includes means for calculating the amount of ink consumed based on the numbers of times of ink ejection counted on a color-by-color basis.

15. A printing cost-calculating system for calculating a printing cost required for preparing printed matter by a printing apparatus using at least one coloring material,
the printing cost-calculating system comprising:
counting means for counting an amount of the at least one coloring material consumed by the printing apparatus;
receiving means for receiving information of the amount of the at least one coloring material consumed which is counted by said counting means, via a network; and
calculating means for calculating the printing cost based on the information received by said receiving means.

16. A printing cost-calculating system according to claim 15, wherein said calculating means includes means for calculating the printing cost by consulting a coloring material price table associating amounts of the at least one coloring material to be consumed with prices of the at least one coloring material corresponding to the respective amounts.

17. A printing cost-calculating system according to claim 15, wherein the printing apparatus includes a printing apparatus using coloring materials of a plurality of colors,
wherein said counting means includes means for counting amounts of the coloring materials consumed, on a color-by-color basis, and
wherein said calculating means includes means for calculating the printing cost by consulting a color-specific coloring material price table associating the respective amounts of the plurality of colors of the coloring materials to be consumed with respective color-specific prices of the coloring materials corresponding to the respective amounts.

18. A printing cost-calculating system according to claim 16, wherein the price of each of the at least one coloring material can be changed in a floating manner.

19. A printing cost-calculating system according to claim 15, wherein said receiving means can receive the information at a desired time or at any time.

20. A printing cost-calculating system according to claim 15, wherein the network is constructed by an internet or a LAN.

21. A printing cost-calculating system according to claim 15, wherein the at least one coloring material includes ink or toner.

22. A printing cost-calculating system according to claim 15, wherein the printing apparatus includes an ink jet printer or an electrophotographic printer.

23. A printing cost-calculating system according to claim 15, wherein said counting means includes means for counting the amount of the at least one coloring material consumed, excluding an amount of the at least one coloring material consumed for other purposes than preparation of the printed matter.

24. A printing cost-calculating system according to claim 23, wherein the amount of the at least one coloring material consumed for other purposes than the preparation of the printed matter includes an amount of the at least one coloring material consumed for maintenance operation of the printing apparatus.

25. A printing cost-calculating system according to claim 23, wherein the printing apparatus includes an ink jet printer including an ink jet head having nozzles for ejecting ink therefrom, and
wherein the amount of the at least one coloring material consumed for other purposes than the preparation of the printed matter includes an amount of ink consumed for automatic cleaning executed by sucking the ink from the nozzles of the ink jet head.

26. A printing cost-calculating system according to claim 23, wherein the printing apparatus includes an ink jet printer including an ink jet head having nozzle for ejecting ink therefrom, and
wherein the amount of the at least one coloring material consumed for other purposes than the preparation of the printed matter includes an amount of ink consumed for periodical flushing executed by ejecting the ink periodically from the nozzle of the ink jet head.

27. A printing cost-calculating system according to claim 26, wherein said counting means includes means for counting the amount of the at least one coloring material consumed, based on a number of times of ink ejection from the ink jet head.

28. A printing cost-calculating system according to claim 27, wherein the ink jet head is capable of ejecting ink in a plurality of unit ejection amounts, and
wherein said counting means includes means for counting numbers of times of ink ejection on a unit ejection amount-by-unit ejection amount basis.

29. A printing cost-calculating system comprising:
a user terminal capable of transmitting information of an amount of at least one coloring material consumed by a printing apparatus; and
a host terminal capable of receiving the information of the amount of the at least one coloring material consumed, and
wherein said host terminal calculates a printing cost and executes a process for placing an order for coloring material supply to the printing apparatus, based on the information received from said user terminal.

30. A printing cost-calculating system according to claim 29, wherein the printing apparatus includes an ink jet printer, and
wherein the amount of the at least one coloring material consumed is calculated based on a number of times of ink ejection from an ink jet head.

31. A coloring material supply management system for supplying at least one coloring material for use in a printing apparatus,
the coloring material supply management system comprising:
counting means for counting an amount of the at least one coloring material consumed by the printing apparatus;
receiving means for receiving information of the amount of the at least one coloring material consumed which is counted by said counting means, via a network; and
first instruction means for issuing an instruction for supply of the at least one coloring material, based on the information received by said receiving means.

32. A coloring material supply management system according to claim 31, wherein the printing apparatus includes a printing apparatus using coloring materials of a plurality of colors,
wherein said counting means includes means for counting amounts of the coloring materials consumed, on a color-by-color basis, and
wherein said first instruction means includes means for issuing instructions for supplying coloring materials on a color-by-color basis.

33. A coloring material supply management system according to claim 31, wherein said receiving means can receive the information at a desired time or at any time.

34. A coloring material supply management system according to claim 31, further comprising second instruction means for issuing an instruction for execution of maintenance services for the printing apparatus when it is detected, based on the information received from said receiving means, that a total amount of the at least one coloring material consumed has reached a predetermined amount.

35. A coloring material supply management system according to claim 31, wherein the network is constructed by an internet or a LAN.

36. A coloring material supply management system according to claim 31, wherein the at least one coloring material includes ink or toner.

37. A coloring material supply management system according to claim 31, further comprising maintenance consumption-counting means for counting an amount of the at least one coloring material consumed for a maintenance operation, and
wherein said receiving means includes means for receiving information of the amount of the at least one coloring material counted by said maintenance consumption-counting means.

38. A coloring material supply management system according to claim 31, wherein the printing apparatus includes an electrophotographic printer.

39. A coloring material supply management system according to claim 31, wherein the printing apparatus includes an ink jet printer including an ink jet head for ejecting ink therefrom.

40. A coloring material supply management system according to claim 39, wherein said counting means includes means for counting the amount of the at least one coloring material consumed, based on a number of times of ink ejection from the ink jet head of the ink jet printer.

41. A coloring material supply management system according to claim 39, wherein the ink jet head is capable of ejecting the ink in a plurality of unit ejection amounts, and
wherein said counting means includes means for counting numbers of times of ink ejection on a unit ejection amount-by-unit ejection amount basis.

42. A coloring material supply management system according to claim 39, further comprising cleaning consumption-counting means for counting an amount of the at least one coloring material consumed for automatic cleaning executed by sucking the ink from the ink jet head, and
wherein said receiving means includes means for receiving information of the amount of the at least one coloring material counted by said cleaning consumption-counting means.

43. A coloring material supply management system according to claim 42, further comprising second instruction means for issuing an instruction for execution of maintenance services for the printing apparatus when it is detected, based on the information received from said receiving means, that a total amount of the at least one coloring material consumed for the automatic cleaning has reached a predetermined amount.

44. A coloring material supply management system according to claim 39, further comprising flushing consumption-counting means for counting an amount of the at least one coloring material consumed for periodical flushing executed by periodically ejecting the ink from the ink jet head, and
wherein said receiving means includes means for receiving information of the amount of the at least one coloring material counted by said flushing consumption-counting means.

45. A coloring material supply management system according to claim 44, further comprising second instruction means for issuing an instruction for execution of maintenance services for the printing apparatus when it is detected, based on the information received from said receiving means, that a total amount of the at least one coloring material consumed for the periodical flushing has reached a predetermined amount.

46. A coloring material supply management system comprising:
a user terminal capable of transmitting information of an amount of at least one coloring material consumed by a printing apparatus; and
a host terminal capable of receiving the information of the amount of the at least one coloring material consumed, via a network, and
wherein said host terminal executes a process for placing an order for coloring material supply to the printing apparatus, based on the information received from said user terminal.

47. A coloring material supply management system according to claim 46, wherein when it is detected, based on the information of the amount of the at least one coloring material consumed, that a total amount of the at least one coloring material consumed has reached a predetermined amount, said host terminal executes a process for placing an order for maintenance services to be executed for the printing apparatus and transmits information of a schedule for execution of the maintenance services to said user terminal.

48. A coloring material supply management system according to claim 46, wherein the printing apparatus includes an ink jet printer including an ink jet head for ejecting ink therefrom, and
wherein the amount of the at least one coloring material consumed is calculated based on a number of times of ink ejection from the ink jet head.

49. A coloring material supply management system comprising:
a user terminal capable of transmitting information of an amount of at least one coloring material consumed, by a printing apparatus; and
a host terminal capable of receiving the information of the amount of the at least one coloring material consumed, via a network, and
wherein said host terminal transmits information of a schedule for supplying the at least one coloring material to said user terminal, based on the information received from said user terminal,
wherein said user terminal transmits information of a request for supply of the coloring material to said host terminal, based on the information received from said host terminal, and
wherein said host terminal executes a process for placing an order for coloring material supply to the printing apparatus, based on the information of the request for supply of the coloring material, which has been received from said user terminal.

50. A coloring material supply management system according to claim 49, wherein when it is detected, based on the information of the amount of the at least one coloring material consumed, that a total amount of the coloring material consumed has reached a predetermined amount, said host terminal executes a process for placing an order for maintenance services to be executed for the printing apparatus and transmits information of a schedule for execution of the maintenance services to said user terminal.

51. A coloring material supply management system according to claim 49, wherein the printing apparatus includes an ink jet printer including an ink jet head for ejecting ink therefrom, and wherein the amount of the at least one coloring material consumed is calculated based on a number of times of ink ejection from the ink jet head.
